Europäisches Patentamt

European Patent Office

Office européen des brevets

(19)

(11) Veröffentlichungsnummer : **0 480 180 B1**

(12)

# EUROPÄISCHE PATENTSCHRIFT

(45) Veröffentlichungstag der Patentschrift :
**21.04.93 Patentblatt 93/16**

(21) Anmeldenummer : **91115147.0**

(22) Anmeldetag : **07.09.91**

(51) Int. Cl.⁵ : **C01B 25/40**

(54) Verfahren und Anlage zur Herstellung von Ammoniumpolyphosphat.

(30) Priorität : **10.10.90 DE 4032133**

(43) Veröffentlichungstag der Anmeldung :
**15.04.92 Patentblatt 92/16**

(45) Bekanntmachung des Hinweises auf die
Patenterteilung :
**21.04.93 Patentblatt 93/16**

(84) Benannte Vertragsstaaten :
**AT BE CH DE DK ES FR GB IT LI NL SE**

(56) Entgegenhaltungen :
**DE-B- 2 330 174**
**GB-A- 2 154 571**

(73) Patentinhaber : **HOECHST**
**AKTIENGESELLSCHAFT**
**Postfach 80 03 20**
**W-6230 Frankfurt am Main 80 (DE)**

(72) Erfinder : **Staffel, Thomas, Dr.**
**Friedrich-Ebert-Strasse 24**
**W-5030 Hürth (DE)**
Erfinder : **Gradl, Reinhard, Dr.**
**Heimbacher Weg 27**
**W-5042 Erftstadt (DE)**
Erfinder : **Becker, Wolfgang**
**Frauenthaler Strasse 85**
**W-5042 Erftstadt (DE)**
Erfinder : **Fucker, Gregor**
**Kranichstrasse 40**
**W-5042 Erftstadt (DE)**

EP 0 480 180 B1

**Beschreibung**

Die vorliegende Erfindung betrifft ein Verfahren zur Herstellung von im wesentlichen wasserunlöslichem, kettenförmigem Ammoniumpolyphosphat aus äquimolaren Mengen von Ammoniumorthophosphat und Phosphorpentoxid bei Temperaturen von 170 bis 350°C in einer ständiges Mischen, Kneten und Zerkleinern bewirkenden Zone in Gegenwart von strömenden Ammoniakgas sowie eine Anlage zu seiner Durchführung.

Bei der Herstellung von Ammoniumpolyphosphat durch Umsetzung von Phosphorpentoxid und Diammoniumphosphat mit Ammoniakgas, beispielsweise nach dem Verfahren gemäß der US-A-3 978 195, ist es erforderlich, nicht nur in der Reaktionsphase sondern auch während der Temperphase im Reaktor die Ammoniakatmosphäre aufrechtzuerhalten, da sonst thermische Zersetzung des Ammoniumpolyphosphates einsetzt. Während der Temperphase wird im Reaktor durch die fortschreitende Kondensation der Phosphatgruppen Wasserdampf freigesetzt, der zur Erzielung eines Ammoniumpolyphosphates hoher Qualität entfernt werden muß. Daher ist es von Wichtigkeit, auch während der Temperphase eine größere Menge Ammoniak als Transportgas für den Wasserdampf durch den Reaktor hindurchzuleiten, obwohl der Ammoniak-Verbrauch in dieser Phase geringer ist als in der Reaktionsphase. Das Abblasen des Wasserdampf und Ammoniak enthaltenden Abgases aus dem Reaktor in die Atmosphäre verbietet sich jedoch aus Gründen des Umweltschutzes. Absorbiert man die während der Temperphase aus dem Reaktor austretenden, mit Feuchtigkeit und Ammoniak beladenen Gase in Gegenstromwäschern, so muß die anfallende ammoniakhaltige Flüssigkeit einer Kläranlage zugeführt werden. Dabei ist von Nachteil, daß der Betrieb einer biologischen Kläranlage durch größere Ammoniakmengen gestört wird.

Es ist daher Aufgabe der vorliegenden Erfindung, ein Verfahren zur Herstellung von im wesentlichen wasserunlöslichem Ammoniumpolyphosphat aus äquimolaren Mengen von Diammoniumphosphat und Phosphorpentoxid in einer ständiges Mischen, Kneten und Zerkleinern bewirkenden Zone in Gegenwart von strömenden Ammoniakgas sowie eine Anlage zu seiner Durchführung anzugeben, bei welchen weder ammoniakhaltiges Abgas in die Atmosphäre abgeblasen wird noch ammoniakhaltige Flüssigkeiten in einer Menge anfallen, durch die der Betrieb einer biologischen Kläranlage gestört wird. Das wird erfindungsgemäß dadurch erreicht, daß man aus dem aus der Zone austretenden wasserdampfhaltigen Ammoniakgas das Wasser abtrennt und das getrocknete Ammoniakgas erneut durch die Zone hindurchströmen läßt.

Das Verfahren gemäß der Erfindung kann weiterhin wahlweise auch noch dadurch ausgestaltet sein, daß
a) man das Wasser aus dem wasserdampfhaltigen Ammoniakgas durch Auskondensieren in einer Kühlzone abtrennt;
b) als Kühlzone ein Kühler dient, welcher mit einem Temperaturen von -20°C bis +20°C aufweisenden Kühlmedium beaufschlagt ist;
c) man das Wasser aus dem wasserdampfhaltigen Ammoniakgas mit Hilfe eines Molekularsiebes mit einem Porendurchmesser von 0,3 nm abtrennt;
d) man das wasserdampfhaltige Ammoniakgas zur Abtrennung des Wassers durch eine Schüttung aus festen Ätzalkalien leitet;
e) man das wasserdampfhaltige Ammoniakgas zur Abtrennung des Wassers durch eine konzentrierte wäßrige Ätzalkalilösung hindurchtreten läßt;
f) man als Ätzalkalien Lithiumhydroxid, Natriumhydroxid, Kaliumhydroxid oder deren Mischungen verwendet;
g) man das getrocknete Ammoniakgas vor seinem erneuten Hindurchströmen durch die Zone durch indirekten Wärmeaustausch erwärmt;
h) man zusätzlich frisches Ammoniakgas in die Zone einströmen läßt.

Zur Durchführung des erfindungsgemäßen Verfahrens kann eine aus einem Reaktor bestehende Anlage, in welchen ein Ammoniakzuführungsrohr sowie Rohre zur Zuführung von Phosphorpentoxid und Diammoniumphosphat einmünden und von welchem ein Ammoniumpolyphosphat-Austragsrohr und ein Abgasrohr abgehen, dadurch gekennzeichnet sein, daß das Abgasrohr in einen Kühler einmündet, daß der Kühler über eine Pumpe strömungsmäßig mit einem Wärmeaustauscher verbunden ist und daß vom Wärmeaustauscher eine Abgasleitung abgeht, welche in das Ammoniak-Zuführungsrohr einmündet.

Diese Anlage kann auch noch dadurch weitergebildet sein, daß
i) der Kühler zum Durchströmen mit Kühlmedium mit einer Vorlaufleitung und Rücklaufleitung verbunden ist;
j) der Wärmeaustauscher mit einer Dampfzuführungsleitung und einer Kondensatableitung verbunden ist.

Beim Verfahren gemäß der Erfindung wird Ammoniakgas unter Zwischenschalten einer Regenerationsstufe, in welcher das aus dem Reaktor stammende Wasser entfernt wird, im Kreislauf geführt.

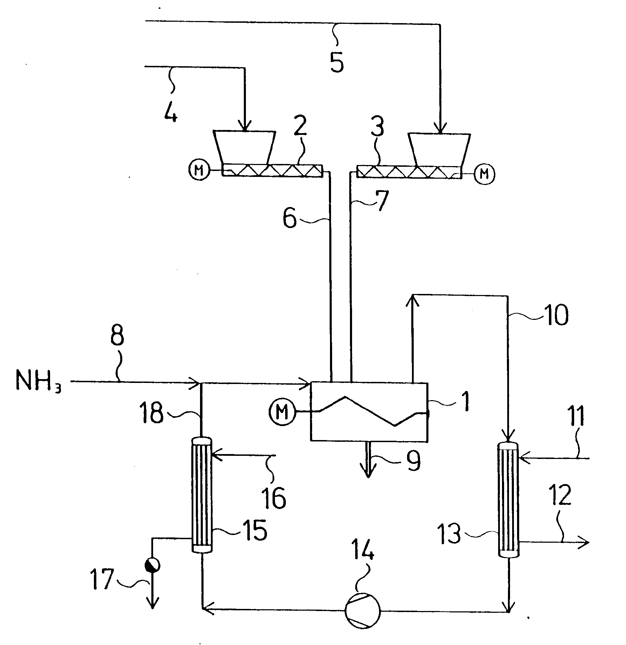

In der beigefügten Zeichnung ist eine Anlage zur Durchführung des erfindungsgemäßen Verfahrens schematisch dargestellt.

Oberhalb eines Reaktors 1 sind eine erste Dosiereinrichtung 2 für Phosphorpentoxid und eine zweite Dosiereinrichtung 3 für Diammoniumphosphat angeordnet. In die Dosiereinrichtungen (2, 3) münden Zuführungsrohre (4, 5) ein und von ihnen gehen in den Reaktor 1 führende Rohre (6, 7) ab. In den Reaktor 1 mündet weiterhin ein Ammoniak-Zuführungsrohr 8 ein, während im Boden des Reaktors 1 ein Ammoniumpolyphosphat-Austragsrohr 9 angeordnet ist. Vom Reaktor 1 geht ein Abgasrohr 10 ab, welches in einen mit Vorlaufleitung 11 und Rücklaufleitung 12 für ein Kühlmedium versehenen Kühler 13 mündet. Der Kühler 13 ist strömungsmäßig mit einer Pumpe 14 und einem Wärmeaustauscher 15 verbunden, welcher mit einer Dampfzuführungsleitung 16 und einer Kondensatableitung 17 verbunden ist. Vom Wärmeaustauscher 15 geht eine Abgasleitung 18 ab, welche in das Ammoniak-Zuführungsrohr 8 einmündet.

Beispiel 1

Bei der Herstellung von Ammoniumpolyphosphat in einem Knetreaktor nach der US-A-3 978 195 lassen sich zwei Reaktionsabschnitte unterscheiden: Im ersten Abschnitt weist der gesamte Inhalt des Knetreaktors teigige Konsistenz auf, während nach etwa der halben Reaktionszeit der Inhalt des Knetreaktors erhärtet und von den Knetwerkzeugen zu einem feinen Pulver zermahlen wird. Dieses Pulver weist beispielsweise einen pH-Wert von 2,9; eine Säurezahl von 60 mg KOH/g sowie einen wasserlöslichen Anteil (bei 25°C in 10 %iger wäßriger Suspension) von 40 % auf und ist damit nicht spezifikationsgerecht.

Zur Temperung dieses Pulvers wurde eine Anlage gemäß der Figur verwendet, bei welcher der Reaktor 1 einschließlich der in ihn hineinführenden Rohre (6, 7) durch einen elektrisch beheizbaren Röhrenofen ersetzt war.

In den Röhrenofen wurde ein Sinterkorund-Schiffchen eingebracht, in welchem sich jeweils 24 g des feinen Pulvers befanden. Der Röhrenofen wurde soweit aufgeheizt, daß das Schiffchen eine Temperatur von 280°C aufwies.

Die Temperung wurde an sieben verschiedenen Proben vorgenommen; die eingestellten Parameter und die resultierenden Ammoniumpolyphosphate sind der Tabelle zu entnehmen.

Beispiel 2

In Anlehnung an das Verfahren gemäß der US-A-3 978 195 wurden in den auf 140°C erhitzten, als Kneter ausgebildeten Reaktor 1 (vergl. die Figur) über das Rohr 6 540 kg Phosphorpentoxid und über das Rohr 7 500 kg Diammoniumphosphat innerhalb von 30 Minuten eingetragen. Es wurde 5 Stunden unter Einleiten von insgesamt etwa 80 Nm³ Ammoniak weitergeknetet. Nachdem der Abfall in der Stromaufnahme des Motors am Reaktor 1 das Ende der Reaktionsphase anzeigte, wurde Ammoniakgas über das Abgasrohr 10, den Kühler 13, die Pumpe 14, den Wärmeaustauscher 15 und die Abgasleitung 18 im Kreislauf geführt und 3,5 Stunden weitergeknetet, wobei während dieser Zeit etwa 10 Volumen% des im Kreislauf geführten Gasvolumens frisches Ammoniakgas über das Ammoniak-Zuführungsrohr 8 in den Kreislauf eingebracht wurden. Dabei betrug die Temperatur im Kühler 13 15°C, die Gasströmung im Kreislauf 350 m³/h und die Gastemperatur am Ausgang des Wärmeaustauschers 15 160°C

Das danach aus dem Austragsrohr 9 ausgetragene Ammoniumpolyphosphat wies einen pH-Wert von 6,5; eine Säurezahl von 0,3 mg KOH/g und einen wasserlöslichen Anteil (bei 25°C) von 4,3 % auf.

Tabelle

| Nr. | Temperatur im Kühler | Gasströ- mung | Tempe- ratur Gas- eintritt | Reaktions- zeit | pH-Wert | Säure- zahl | wasser- lösli- cher Anteil |
|---|---|---|---|---|---|---|---|
| | °C | l/h | °C | h | | mg KOH/g | % |
| Angestrebte Zielwerte | | | | | > 4,5 | < 1 | < 10 |
| 1 | 12 | 150 | 25 | 1 | 7,3 | 0,0 | 6,4 |
| 2 | 12 | 1100 | 204 | 1 | 6,9 | 0,1 | 6,5 |
| 3 | 12 | 150 | 50 | 1 | 7,3 | 0,0 | 5,8 |
| 4 | 12 | 370 | 25 | 1 | 7,2 | 0,0 | 5,5 |
| 5 | -10 | 150 | 15 | 1 | 6,8 | 0,2 | 6,7 |
| 6 | 0 | 150 | 20 | 1 | 7,0 | 0,0 | 6,1 |
| 7 | 12 | 150 | 25 | 0,5 | 7,0 | 0,0 | 6,0 |

EP 0 480 180 B1

**Patentansprüche**

1. Verfahren zur Herstellung von im wesentlichen wasserunlöslichen, kettenförmigem Ammoniumpolyphosphat aus äquimolaren Mengen von Diammoniumphosphat und Phosphorpentoxid bei Temperaturen von 170 bis 350°C in einer ständiges Mischen, Kneten und Zerkleinern bewirkenden Zone in Gegenwart von strömenden Ammoniakgas, dadurch gekennzeichnet, daß man aus dem aus der Zone austretenden wasserdampfhaltigen Ammoniakgas das Wasser abtrennt und das getrocknete Ammoniakgas erneut durch die Zone hindurchströmen läßt.

2. Verfahren nach Anspruch 1, dadurch gekennzeichnet, daß man das Wasser aus dem wasserdampfhaltigen Ammoniakgas durch Auskondensieren in einer Kühlzone abtrennt.

3. Verfahren nach Anspruch 1 oder 2, dadurch gekennzeichnet, daß als Kühlzone ein Kühler dient, welcher mit einem Temperaturen von -20°C bis +20°C aufweisenden Kühlmedium beaufschlagt ist.

4. Verfahren nach Anspruch 1, dadurch gekennzeichnet, daß man das Wasser aus dem wasserdampfhaltigen Ammoniakgas mit Hilfe eines Molekularsiebes mit einem Porendurchmesser von 0,3 nm abtrennt.

5. Verfahren nach Anspruch 1, dadurch gekennzeichnet, daß man das wasserdampfhaltige Ammoniakgas zur Abtrennung des Wassers durch eine Schüttung aus festen Ätzalkalien leitet.

6. Verfahren nach Anspruch 1, dadurch gekennzeichnet, daß man das wasserdampfhaltige Ammoniakgas zur Abtrennung des Wassers durch eine konzentrierte wäßrige Ätzalkalilösung hindurchtreten läßt.

7. Verfahren nach Anspruch 5 oder 6, dadurch gekennzeichnet, daß man als Ätzalkalien Lithiumhydroxid, Natriumhydroxid, Kaliumhydroxid oder deren Mischungen verwendet.

8. Verfahren nach mindestens einem der Ansprüche 1 bis 7, dadurch gekennzeichnet, daß man das getrocknete Ammoniakgas vor seinem erneuten Hindurchströmen durch die Zone durch indirekten Wärmeaustausch erwärmt.

9. Verfahren nach mindestens einem der Ansprüche 1 bis 8, dadurch gekennzeichnet, daß man zusätzlich frisches Ammoniakgas in die Zone einströmen läßt.

10. Anlage zur Durchführung des Verfahrens nach mindestens einem der Ansprüche 1 bis 3 sowie 8 und 9, bestehend aus einem Reaktor, in welchen ein Ammoniakzuführungsrohr sowie Rohre zur Zuführung von Phosphorpentoxid und Diammoniumphosphat einmünden und von welchem ein Ammoniumpolyphosphat-Austragsrohr und ein Abgasrohr abgehen, dadurch gekennzeichnet, daß das Abgasrohr (10) in einen Kühler (13) einmündet, daß der Kühler (13) über eine Pumpe (14) strömungsmäßig mit einem Wärmeaustauscher (15) verbunden ist und daß vom Wärmeaustauscher (15) eine Abgasleitung (18) abgeht, welche in das Ammoniak-Zuführungsrohr (8) einmündet.

11. Anlage nach Anspruch 10, dadurch gekennzeichnet, daß der Kühler (13) zum Durchströmen mit Kühlmedium mit einer Vorlaufleitung (11) und Rücklaufleitung (12) verbunden ist.

12. Anlage nach Anspruch 10 oder 11, dadurch gekennzeichnet, daß der Wärmeaustauscher (15) mit einer Dampfzuführungsleitung (16) und einer Kondensatableitung (17) verbunden ist.

**Claims**

1. A process for producing substantially water-insoluble, chain type ammonium polyphosphate from equimolar quantities of diammonium phosphate and phosphorus pentoxide at temperatures from 170 to 350°C in a zone, which effects continuous mixing, kneading and comminution in the presence of a stream of ammonia gas, which comprises separating the water from the ammonia gas which leaves the zone and contains water vapor, and causing the dried ammonia gas to flow again through the zone.

2. The process as claimed in claim 1, wherein the water is separated from the ammonia gas containing water vapor by condensing it out in a cooling zone.

3. The process as claimed in claim 1 or 2, wherein the cooling zone used is a condenser charged with a coolant having temperatures from -20°C to +20°C.

4. The process as claimed in claim 1, wherein the water is separated from the ammonia gas containing water vapor by means of a molecular sieve having a pore diameter of 0.3 nm.

5. The process as claimed in claim 1, wherein the ammonia gas containing water vapor is passed through a bed of solid caustic alkalis for separating off the water.

6. The process as claimed in claim 1, wherein the ammonia gas containing water vapor is caused to pass through a concentrated aqueous caustic alkali solution for separating off the water.

7. The process as claimed in claim 5 or 6, wherein lithium hydroxide, sodium hydroxide, potassium hydroxide or mixtures thereof are used as the caustic alkalis.

8. The process as claimed in at least one of claims 1 to 7, wherein the dried ammonia gas is heated by indirect heat exchange before it flows again through the zone.

9. The process as claimed in at least one of claims 1 to 8, wherein additionally fresh ammonia gas is caused to flow into the zone.

10. A plant for carrying out the process as claimed in at least one of claims 1 to 3 and 8 and 9, comprising a reactor, into which an ammonia feed pipe and pipes for feeding phosphorus pentoxide and diammonium phosphate lead and from which an ammonium polyphosphate discharge pipe and an exit gas pipe start, wherein the exit gas pipe (10) leads into a condenser (13), the condenser (13) is flow-connected via a pump (14) to a heat exchanger (15), and an exit gas line (18) starts from the heat exchanger (15) and leads into the ammonia feed pipe (8).

11. The plant as claimed in claim 10, wherein the condenser (13) is connected, for a coolant flow through it, to a supply line (11) and a return line (12).

12. The plant as claimed in claim 10 or 11, wherein the heat exchanger (15) is connected to steam feed line (16) and a condensate discharge line (17).

## Revendications

1. Procédé pour la fabrication de polyphosphate d'ammunium linéaire pratiquement insoluble dans l'eau à partir de quantités équimolaires de phosphate diammonique et de pentoxyde phosphore à des températures de 170 à 350°C dans une zone produisant un effet constant de mélange, de malaxage et de broyage en présence d'un courant de gaz ammoniac, caractérisé en ce que l'on sépare l'eau du gaz ammoniac contenant de la vapeur d'eau sortant de la zone et on fait à nouveau circuler le gaz ammoniac séché à travers la zone.

2. Procédé selon la revendication 1, caractérisé en ce que l'on sépare l'eau du gaz ammoniac contenant de la vapeur d'eau par condensation dans une zone de refroidissement.

3. Procédé selon la revendication 1 ou 2, caractérisé en ce que l'on utilise comme zone de refroidissement un réfrigérant qui est chargé avec un milieu réfrigérant présentant des températures de -20 à +20°C.

4. Procédé selon la revendication 1, caractérisé en ce que l'on sépare l'eau du gaz ammoniac contenant de la vapeur d'eau au moyen d'un tamis moléculaire ayant un diamètre de pores de 0,3 nm.

5. Procédé selon la revendication 1, caractérisé en ce que l'on envoie le gaz ammoniac contenant de la vapeur d'eau pour le séchage à travers un garnissage d'alcalis caustiques solides.

6. Procédé selon la revendication 1, caractérisé en ce que l'on fait passer le gaz ammoniac contenant de la vapeur d'eau pour la séparation de l'eau à travers une solution aqueuse concentrée d'alcali caustique.

7. Procédé selon la revendication 5 ou 6, caractérisé en ce que l'on utilise comme alcalis caustiques l'hydroxyde de lithium, l'hydroxyde de sodium, l'hydroxyde de potassium ou leurs mélanges.

8. Procédé selon l'une au moins des revendications 1 à 7, caractérisé en ce que l'on chauffe le gaz ammoniac séché par échange indirect de chaleur avant de la faire circuler à nouveau à travers la zone.

9. Procédé selon l'une au moins des revendications 1 à 8, caractérisé en ce que l'on fait passer en outre dans la zoner du gaz ammoniac frais.

10. Appareil pour la mise en oeuvre du procédé selon l'une au moins des revendications 1 à 3 et 8 et 9, consistant en un réacteur, dans lequel débouchent un tube d'amenée d'ammoniac et des tubes pour l'amenée de pentoxyde de phosphore et de phosphate diammonique et d'où partent un tube de décharge du polyphosphate d'ammonium et un tube de gaz résiduaire, caractérisé en ce que le tube de gaz résiduaire (10) débouche dans un réfrigérant (13), en ce que le réfrigérant (13) est relié dans le sens du courant par une pompe (14) à un échangeur de chaleur (15) et en ce qu'une conduite de gaz résiduaire (18) part de l'échangeur de chaleur (15) et débouche dans le tube d'amenée d'ammoniac (8).

11. Appareil selon la revendication 10, caractérisé en ce que le réfrigérant (13) est relié pour la circulation du milieu réfrigérant à une conduite d'alimentation (11) et une conduite de recyclage (12).

12. Appareil selon la revendication 10 ou 11, caractérisé en ce que l'échangeur de chaleur (15) est relié à une conduite d'amenée de vapeur (16) et une conduite de décharge de condensat (17).